# EUROPÄISCHE PATENTSCHRIFT

(11) **EP 1 429 860 B1**
(45) Veröffentlichungstag und Bekanntmachung des Hinweises auf die Patenterteilung: **30.11.2005**
(21) Anmeldenummer: 02779339.7
(22) Anmeldetag: 12.09.2002
(51) Int. Cl.: B01D 61/48

(54) **VORRICHTUNG ZUR MAGNETISCH GEORDNETEN ELEKTRODEIONISATION**
DEVICE FOR MAGNETICALLY CONTROLLED ELECTRODEIONISATION
DISPOSITIF D'ELECTRODEIONISATION A ORDONNANCEMENT MAGNETIQUE

(30) Priorität: 27.09.2001 DE 10147842
(43) Veröffentlichungstag der Anmeldung: 23.06.2004
(73) Patentinhaber: Forschungszentrum Karlsruhe GmbH, 76133 Karlsruhe (DE)
(72) Erfinder: FRANZREB, Matthias, 76185 Karlsruhe (DE)
(86) Internationale Anmeldenummer: PCT/EP2002/010215
(87) Internationale Veröffentlichungsnummer: WO 2003/028863

(56) Entgegenhaltungen:
- US-A- 4 314 905
- US-A- 5 593 563
- US-A- 5 858 191
- US-B1- 6 284 124
- GANZI G C, WOOD, J H, GRIFFIN C S: "Water Purification and Recycling Using the CDI Process" ENVIRONMENTAL PROGRESS, Bd. 11, Nr. 1, 1992, Seiten 49-53, XP008011182

## Beschreibung

Die Erfindung betrifft ein Verfahren und eine Vorrichtung zur Elektrodeionisation (EDI) für die Demineralisierung von wässrigen Lösungen gemäß dem Oberbegriff des ersten Patentanspruchs.

EDI-Verfahren werden bereits für die Demineralisierung von wässrigen Lösungen eingesetzt. Es beruht im Prinzip auf einer Kombination aus Elektrodialyse, Ionenaustausch und elektrochemischer Wasserspaltung zur Generierung von H⁺ und OH⁻ Ionen.

Einen generellen Überblick über EDI-Verfahren und -Vorrichtungen findet sich in [1].

EDI-Vorrichtungen weisen Kat- und Anionenaustauschermembranen auf, welche in abwechselnder Reihenfolge und vorzugsweise mit gleichem Abstand zueinander zu einem Stapel zusammengesetzt und in einem Gehäuse eingesetzt sind. Dabei sind die außenliegenden Membranen je eine Kat- und eine Anionenaustauschermembran. Die Bereiche zwischen diesen Membranen sind als durchströmbare Kompartimente mit Zu- und Ablauf ausgebildet. Transversal zu der Durchströmungsrichtung der Kompartimente und orthogonal zu den Membranen wird ein elektrisches Gleichspannungsfeld angelegt. Das Feld wird dabei über Elektroden an den Stapelenden, die mit einer externen Spannungsquelle verbunden sind, erzeugt.

Aufgrund ihrer Ladung beginnen die Ionen in der wässrigen Lösung im elektrischen Gleichspannungsfeld in den Kompartimenten in Richtung ihrer entsprechenden Gegenelektroden zu wandern, d.h. die Kationen wandern zur Kathode und die Anionen zur Anode. Dabei sind die Kationen und Anionen in der Lage, jeweils die Kat- bzw. die Anionenaustauschermembranen zu durchdringen. Dagegen stellen Kationenaustauschermembranen nahezu undurchdringliche Barrieren für Anionen sowie Anionenaustauschermembranen undurchdringliche Barrieren für Kationen dar. Durch die abwechselnde Anordnung der beiden Membranarten kommt es im Gleichspannungsfeld hierdurch zur Ausbildung von Kompartimenten in denen sich die Ionen anreichern (Konzentratkompartimente (KK)) und solche in denen sie sich abreichern (Demineralisationskompartimente (DK)).

Bei einer EDI-Vorrichtung sind zudem die Kompartimente mit Formkörperschüttungen aus Ionentauscherharzen (Mischbed) gefüllt, wobei die einzelnen Partikel (Formkörper) entweder aus einem Kat- oder einem Anionenaustauscherharz und die Schüttungen aus Partikelmischungen von beiden Ionentauscherharzarten bestehen. Durch Einfüllen des Mischbeds verkürzt sich der elektrische Ladungstransport in der wässrigen Lösung, dessen elektrischer Widerstand mit zunehmenden Demineralisierungsgrad zunimmt, erheblich, und zwar von dem Weg zur nächsten zur Ionenladung passenden Austauschermembran auf den Weg zu einer Partikeloberfläche der jeweiligen Anionen- oder Kationenaustauscherharzfraktion. Unter dem Einfluss des elektrischen Gleichspannungsfelds werden durch Ionenaustausch die aufgenommenen An- und Kationen im jeweiligen Austauscherharz innerhalb der Partikel und über die Partikelgrenzen hinweg zu anderen Partikeln weitergeleitet, diffundieren durch die je nach Ionenart durchläsige Austauschermembran und gelangen damit vom DK in ein KK. Hierbei ist zu beachten, dass Kationen nur von Kationenaustauscherpartikeln zu Kationenaustauscherpartikel und Anionen ausschließlich von Anionenaustauscherkorn zu Anionenaustauscherkorn weitergeleitet werden können. Damit Ionen das komplette DK durchqueren können ist also die Existenz durchgängiger Partikelketten von Ionenaustauscherpartikeln der gleichen Typs notwendig.

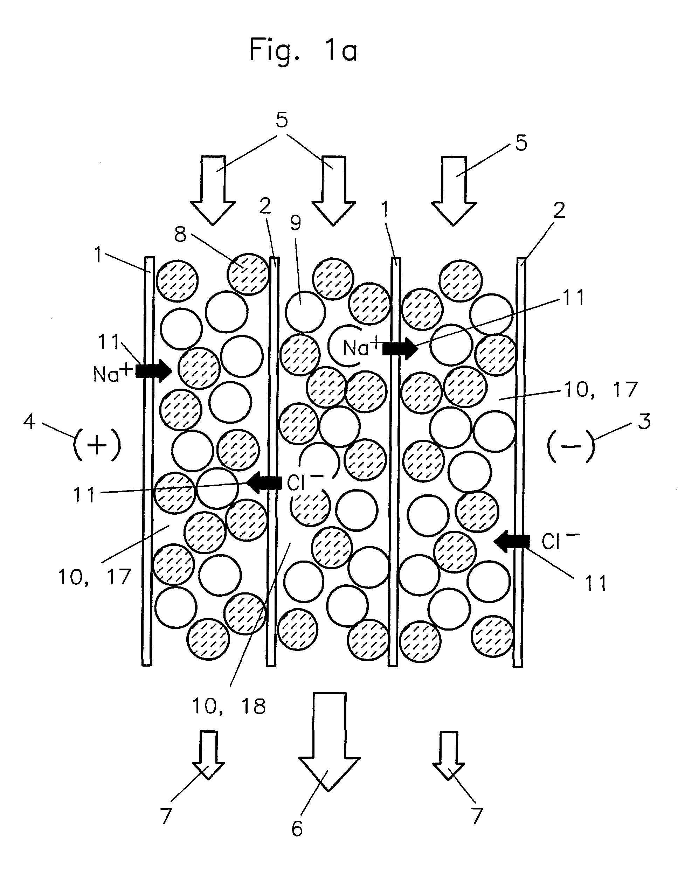

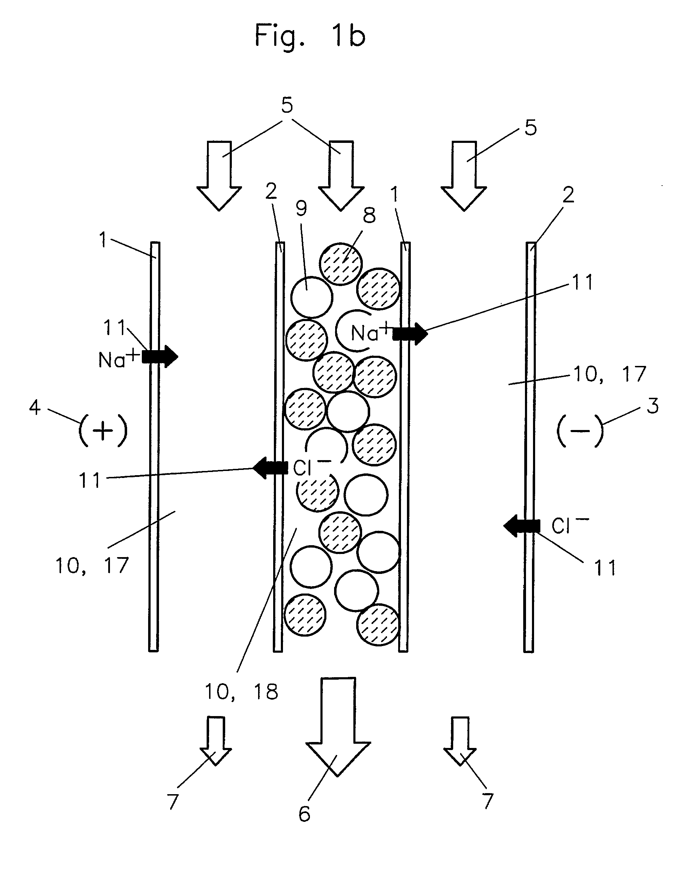

Grundsätzlich werden in [1] zwei Varianten einer EDI-Vorrichtung beschrieben, nämlich eine Variante, bei der alle Kompartimente mit dem Mischbed gefüllt sind (vgl. Fig. 1 a), und eine andere Variante, bei der nur die DK mit dem Mischbed gefüllt sind, während die verbleibenden KK nicht mit dem Mischbed gefüllt sind, d. h. ungefüllt verbleiben (vgl. Fig. 1 b).

Beim Einsatz eines Mischbeds werden somit die aus der wässrigen Lösung zu entfernenden Ionen zum größten Teil bereits durch die entsprechenden Ionenaustauscherharzfraktion des Mischbed gegen H⁺ oder OH⁻ Ionen ausgetauscht und damit aus der Lösung entfernt. Die freigesetzten H⁺ und OH- reagieren in der wässrigen Lösung zu Wasser. Es entsteht ein Produkt mit sehr niedriger Ionenkonzentration und damit geringer Leitfähigkeit.

Für die Durchführung einer kontinuierlichen EDI ist zudem die laufende Nachlieferung der beim Austausch der Ionen verbrauchten H⁺ und OH- Ionen sicherzustellen. Die Generierung der benötigten H⁺ und OH- Ionen erfolgt durch Wassersplitting unter Einfluss des angelegten elektrischen Felds. Hierdurch werden die Ionenaustauscherharze ständig regeneriert ohne, dass hierzu zusätzliche Chemikalien eingesetzt werden müssen. Im Prinzip stellt die EDI damit ein sehr effektives und umweltfreundliches Verfahren zur Demineralisierung dar.

Der Einsatzbereich von EDI-Vorrichtungen grenzt sich jedoch in Praxi durch den aufwendigen Aufbau und den damit verbundenen hohen Preis, welcher sich durch den relativ hohen Preis des Membranmaterials sowie den enormen Aufwand für die Zu- und Abläufe erklärt, erheblich ein. Aufgrund der statistischen Verteilung der Kat- und Anionenaustauscherharzpartikel ist nämlich der zulässige Membranabstand, über den noch eine ausreichende Anzahl durchgängiger Pfade über Kontaktstellen gleichartiger Partikel existiert, stark eingeschränkt. In Folge dessen sind für die gängigen EDI-Vorrichtungen eine relativ hohe Anzahl von Membranen erforderlich.

Mit dem Zweck zur Verringerung dieser Problematik, nämlich der Effizienzsteigerung sowie zur Kostenreduzierung sind verschiedene Ansätze dokumentiert.

[2] beschreibt hierzu die Verwendung von sogenannten Monosphere-Ionenaustauscherharzpartikel (Ionenaustauscherharzkugeln), d.h. von Ionenaustauschern nahezu gleichförmiger Partikelgröße anstelle der sonst üblichen Austauscherharze mit breiter Partikelgrößenverteilung. Die Verwendung von Monosphere-Ionenaustauscherharzpartikel führt zu einer höheren Packungsdichte der Mischbetten und verbessert damit den Ionentransfer. Das Problem einer statistischen Verteilung der verschiedenen Ionenaustauschersorten bleibt aber bestehen, so dass der optimale Abstand der Membranen zueinander nur unwesentlich vergrößert werden kann.

Ferner wird in [3] eine EDI-Vorrichtung mit schichtweiser Anordnung der beiden Ionenaustauscherpartikelfraktionen beschrieben, sodass innerhalb einer jeden Lage im Idealfall entweder nur Kat-oder nur Anionenaustauscher vorkommen. Dies führt zu einer drastischen Erhöhung der Kontaktflächen zwischen gleichartigen Ionentauscherpartikel und damit zu einer wesentlichen Verbesserung des Ionentransfers innerhalb einer jeden Lage. Dies erlaubt eine erhebliche Abstandsvergrößerung der Membranabstände. Jedoch sinkt die Effizienz der Ionenaufnahme mit zunehmender Schichtdicke wieder. Einer der Ursachen hierfür ist, dass die beim Austausch von z. B. Na⁺ und Cl⁻ freigesetzten H⁺ und OH- -Ionen nicht in unmittelbarer Nachbarschaft zueinander entstehen und sich dadurch nicht umgehend zu Wasser verbinden können. Hierdurch werden diese Ionen dem Ionenaustauschgleichgewicht nicht wie sonst üblich augenblicklich entzogen. Eine schichtweise Anordnung behindert somit eine augenblickliche Neutralisation, was sich ungünstig auf das Ionenaufnahmevermögen auswirkt.

Ausgehend davon hat die vorliegenden Erfindung zur Aufgabe, eine EDI-Vorrichtung vorzuschlagen, wobei die Effizienz der Ionenaufnahme für die Demineralisierung von wässrigen Lösungen auch bei größeren Membranabständen im Stapel der EDI-Vorrichtung gegeben sein soll.

Die Aufgabe wird gelöst, indem einerseits entweder die komplette Kationen- oder die komplette Anionenaustaucherharzpartikelfraktion durch Zusätze magnetische Eigenschaften verliehen bekommt und andererseits der Stapel mit den Membranen während des Einfüllens der Partikel in die Kompartimente sowie zumindest im Falle weichmagnetischer, d. h. nicht permanenter magnetischen Eigenschaften der magnetischen Fraktion auch während des Betriebs der EDI-Vorrichtung mit einem Magnetfeld mit vorzugsweise orthogonal zu den Membranen ausgerichteten Feldlinien beaufschlagt wird.

Das Anlegen des Magnetfelds bewirkt in besonders vorteilhafter Weise eine Aneinanderreihung der Ionenaustauscherharzpartikel der magnetischen Fraktion zu dünnen Ketten in Richtung der magnetischen Feldlinien, während die unmagnetische zweite Fraktion den verbleibenden Platz um diese Kettungen einnimmt. Durch die magnetischen Eigenschaften sind zudem die für den Ladungstransport erforderlichen Kontakte der aneinandergereihten Partikel der einen Ionentauscherharzpartikelfraktion über die gesamte Kettenlänge hinweg sichergestellt. In der Regel überbrücken die Ketten zudem die Kompartimente zwischen zwei benachbarten Membranen. Zusätzlich tritt der Effekt auf, dass sich die einzelnen Ketten der magnetischen Fraktion gegeneinander abstoßen. Dies hat zur Folge, dass sich die Ketten gleichmäßig in den Kompartimenten und parallel, aber mit größtmöglichem Abstand zueinander anordnen. Ist der Abstand den die Ketten einnehmen können durch Behälterwände begrenzt, so ergibt sich im Idealfall ein geordnetes dreidimensionales Muster, das sich aus parallel verlaufenden Ketten der magnetischen Ionenaustauscherfraktion zusammensetzt.

Da diese Kettenstrukturen wesentlich feingliedriger als die in [3] beschriebenen schichtweise angeordneten Strukturen der beiden Ionenaustauschertypen, werden auch die zuvor beschriebenen Effizienzverluste der Ionenaufnahme, welche mit Dicke der schichtweise angeordneten Strukturen zunehmen, weitgehend ausgeschaltet.

Bei der Wahl der magnetischen Eigenschaften der Ionenaustauscherharzfaktion besteht die Wahl zwischen hartmagnetischen Partikeln mit permanenter Magnetisierung und weichmagnetischen Partikeln, d. h. Partikeln die ohne äußeres Feld keine Magnetisierung besitzen.

Hartmagnetische Partikel besitzen den Vorteil, dass sie sich auch ohne äußeres Magnetfeld anziehen und damit auch bei Unterbrechung des angelegten Magnetfeldes stets stabile Ketten bilden. Zum anderen besitzen diese Ketten ohne äußeres Magnetfeld jedoch die Tendenz sich zu Ringen oder losen Verbünden zusammen zu schließen. Im Falle der Verwendung hartmagnetischer Partikel muss daher darauf geachtet werden die Kompartimente, d. h. den Raum zwischen den Membranen dicht zu packen und anschließend durch einen Deckel oder ähnliches fest zu verschließen. Eine zuvor genannte Ringschließung wird hierdurch durch die mechanische Behinderung innerhalb der festen Packung verhindert. Eine andere Maßnahme zur Verhinderung der Ringschließung ist auch nach dem Packungsvorgang ein schwaches Magnetfeld in Richtung der Ketten aufrecht zu erhalten. Hierdurch wird gewährleistet, dass die Ketten in ihrer gestreckten Anordnung verbleiben.

Der Stand der Technik gemäß [1] sowie Ausführungsbeispiele der erfindungsgemäßen magnetfeldgestützten EDI-Vorrichtung, im folgenden MEDI-Vorrichtung genannt, wird anhand von Figuren erläutert. Es zeigen

Fig. 1 a schematisch den Aufbau einer EDI-Vorrichtung, bei der alle Kompartimente mit einem Mischbed gefüllt sind, gemäß des Stands der Technik [1],

Fig. 1 b schematisch den Aufbau einer EDI-Vorrichtung, bei der nur die Demineralisationskompartimente mit einem Mischbed gefüllt sind, gemäß des Stands der Technik [1],

Fig. 2 schematisch den Aufbau einer EDI-Vorrichtung ohne angelegtes Magnetfeld, jedoch mit Anordnung einer selbstausrichtenden hart- und einer unmagnetische Ionenaustauscherharzpartikelfraktionen in den Kompartimenten,

Fig. 3 schematisch den Aufbau einer MEDI-Vorrichtung mit Anordnung einer magnetischen und einer unmagnetische Ionenaustauscherharzpartikelfraktionen in den Kompartimenten, bei der das Magnetfeld über ein Permanentmagnet erzeugt wird, sowie

Fig. 4 schematisch den Aufbau einer MEDI-Vorrichtung mit Anordnung einer magnetischen und einer unmagnetische Ionenaustauscherharzpartikelfraktionen in den Kompartimenten, bei der das Magnetfeld alternativ über eine elektromagnetische Spule erzeugt wird.

Eine mögliche Variante der EDI-Vorrichtung besteht, wie eingangs beschrieben und in Fig. 1 a schematisch dargestellt, aus mehreren Kationenaustauschermembranen 1, mehreren Anionenaustauschermembranen 2, je einer Kathode 3 und einer Anode 4, mindestens einem Zulauf 5 für die zu demineralisierenden wässrigen Lösung, jeweils mindestens einem separaten Ablauf für die demineralisierte wässrige Lösung 6 und für den mit Ionen angereicherten Anteil der wässrigen Lösung 7 sowie ein zwischen den Kat- und Anionenaustauschermembranen 1 und 2 eingefülltes Mischbed mit statistisch gleichmäßig verteilten Anionenaustauscherpartikeln 8 und Kationenaustauscherpartikel 9. Die Kationen- und Anionenaustauschermembranen 1 und 2 sind dabei in abwechselnder Reihenfolge und mit gleichem Abstand zueinander zu einem Stapel zusammengesetzt, wobei die Zwischenräume zwischen den Austauschermembranen Kompartimente 10 genannt werden und von der wässrigen Lösung von den Zuläufen 5 und den Abläufen 6 und 7 durchströmbar sind. Dabei sind die Zu- und Abläufe 5 bis 7 für jedes Kompartiment separat vorzugsweise an jeweils gegenüberliegenden Sirnflächen des Stapels angeordnet, sodass das gesamte Volumen eines jeden Kompartiments 10 durch die wässrige Lösung durchströmt wird. Der Stapel ist zudem in ein nicht in Fig. 1 a dargestelltes Gehäuse für die EDI-Vorrichtung zu allen Seiten hin dichtend eingesetzt und dient zugleich als Träger für die Zu- und Abläufe 5 bis 7. Dabei umschließt dieses Gehäuse jede Austauschermembran einzeln an allen Rändern dichtend und verhindert somit ein Überfließen der wässrigen Lösung von einem zu dem jeweils benachbarten Kompartiment 10 an den Austauschermembranen 1 oder 2 vorbei.

Ferner werden in Fig.1 a die möglichen Passagemöglichkeiten für negativ geladene Anionen, im Beispiel Cl⁻, durch die Anionenaustauschermembranen sowie für positiv geladene Kationen, im Beispiel Na⁺, durch die Kationenaustauschermembranen mit entsprechenden Richtungspfeilen 11, insbesondere dann, wenn an der Kathode 4 und Anode 5 eine Gleichspannung anliegt, aufgezeigt. Diesen Richtungspfeilen folgend konzentrieren sich sowohl die Kat- wie auch die Anionen in jedem zweiten Kompartiment, den Konzentratkompartimenten 17 (KK), an, während der wässrigen Lösung in der verbleibenden anderen Hälfte der Komartiemente, den Demineralisationskompartimente 18 (DK), demineralisiert wird. Entsprechend hierzu sind auch die Abläufe für die demineralisierte wässrige Lösung 6 an die DKs und Abläufe für den mit Ionen angereicherten Anteil der wässrigen Lösung 7 an die KKs angeschlossen, wobei es sich grundsätzlich anbietet, die Abläufe 6 und 7 in jeweils einen separaten Sammelabfluss für die demineralisierte bzw. für die mit Ionen angereicherte wässrige Lösung einmünden zu lassen.

Die zweite eingangs beschriebene mögliche Variante der EDI-Vorrichtung ist in Fig. 1 b schematisch dargestellt. Sie unter-scheidet sich von der in Fig. 1 a offenbarten Variante dadurch, dass das Mischbed nur die Demineralisationskompartimente 18 eingefüllt ist.

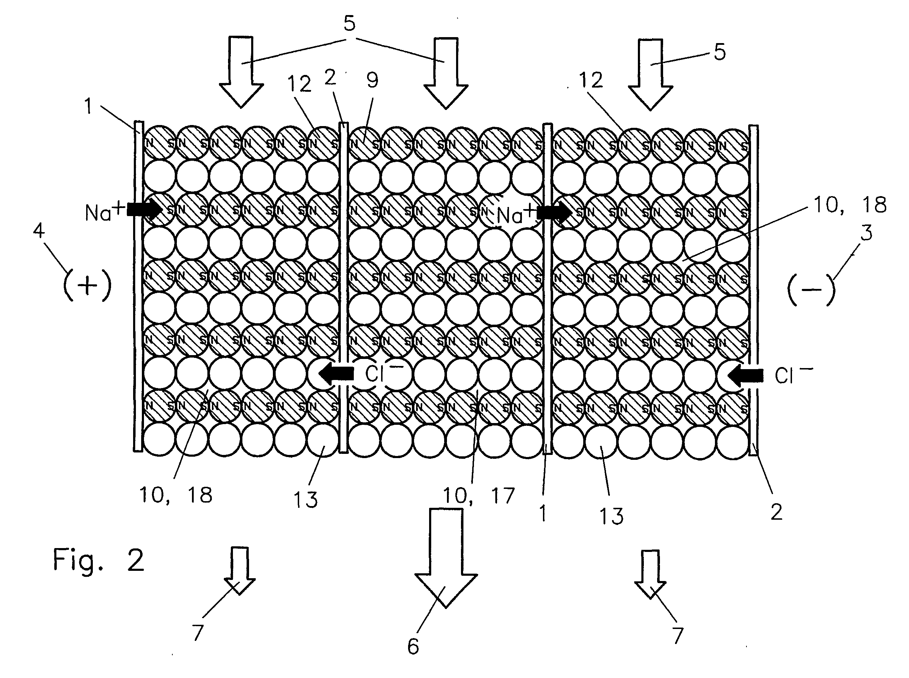

Fig. 2 dagegen zeigt schematisch eine EDI-Vorrichtung mit Anordnung einer selbstausrichtenden hart- und einer unmagnetische Ionenaustauscherharzpartikelfraktionen 12 bzw. 13 in den Kompartimenten 10. Dabei ist es unerheblich, ob die Kat- oder die Anionenaustauscherharzpartikelfraktion durch Zusätze magnetische Eigenschaften aufweist. Entscheidend ist lediglich, dass alle Partikel von nur einer Fraktion magnetisch sind, während die andere Fraktion unmagnetisch ist. Die Verteilung der Partikelfraktionen ist in Fig. 2 idealisiert dargestellt, wobei der Stapel mit allen Kompartimenten für die Ausrichtung der hartmagnetischen Ionentauscherharzpartikel einem Magnetfeld ausgesetzt werden muss, wobei die magnetischen Partikel in Ketten parallel zu den magnetischen Feldlinien zusammensetzen. Folglich müssen die magnetischen Feldlinien vorzugsweise senkrecht zu den Membranen 1 und 2 ausgerichtet sein. Nach der Ausrichtung und der Kettenbildung von hartmagnetischen Partikelfraktion 12 im Mischbed ist aufgrund der permanentmagnetischen Eigenschaften der hartmagnetischen Partikelfraktion 12 das Magnetfeld nicht mehr zwingend erforderlich.

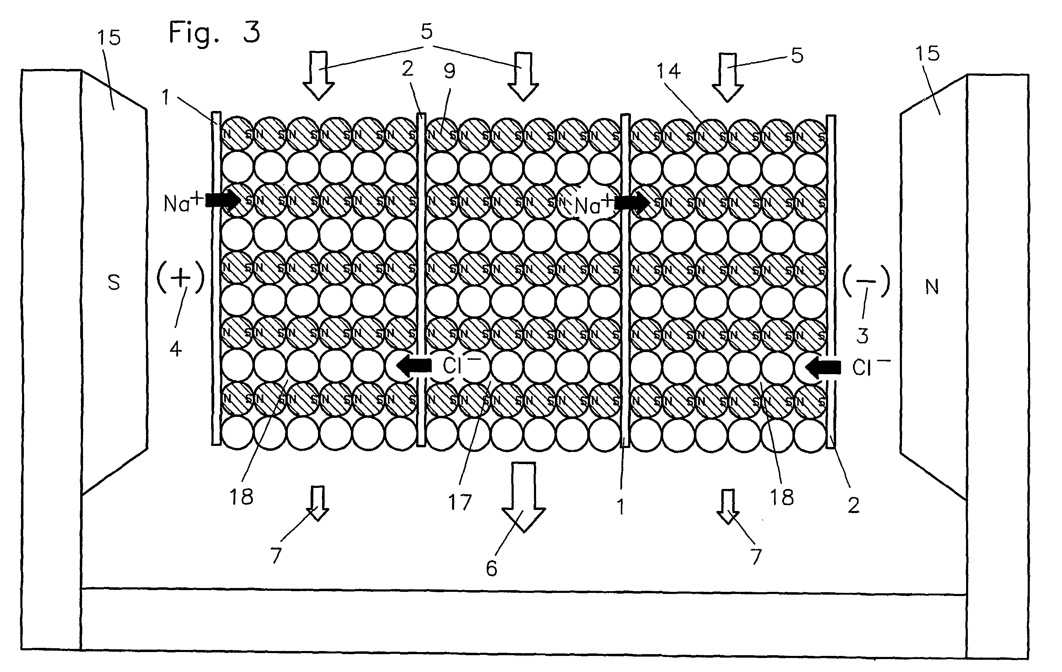

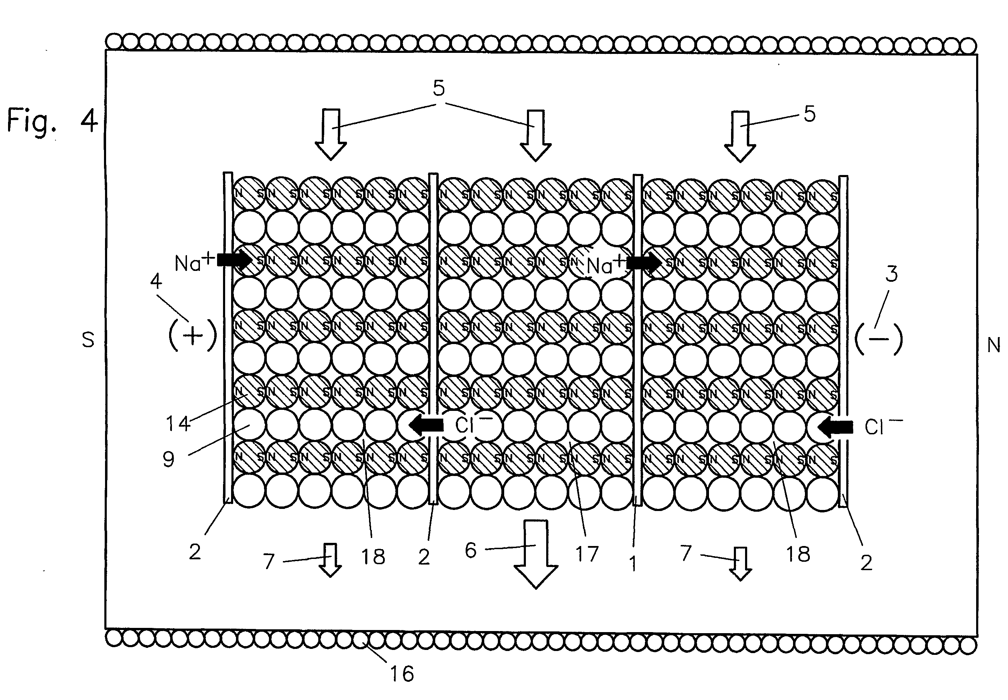

Fig. 3 und 4 zeigen dagegen eine MEDI-Vorrichtung, bestehend aus einer EDI-Vorrichtung, welche in eine Einrichtung zur Erzeugung eines Magnetfeldes integriert ist, dessen Magnetfeldlinien den gesamten Stapel der EDI-Vorrichtung vorzugsweise senkrecht zu den Membranen 1 und 2 durchdringen. Dabei kann die Einrichtung mindestens einen Permanentmagneten (Anordnung vgl. Fig. 3), mindestens einen Elektromagneten (Anordnung vgl. Fig. 4) oder mindestens einen supraleitenden Magneten für die Erzeugung des Magnetfelds enthalten. Dabei kommt ein Mischbed zur Anwendung, welches wie die zuvor anhand der Fig. 2 beschriebenen Bauformen jeweils aus einer Kat- und einer Anionenaustauscherharzpartikelfraktion besteht, von denen alle Partikel einer dieser Fraktionen magnetische Eigenschaften aufweisen muss. Im Gegensatz zu der Bauform nach Fig.2 muss diese magnetische Partikelfaktion 14 nicht unbedingt permanente, d. h. hartmagnetische Eigenschaften aufweisen. Beim permanenten Anliegen eines magentischen Feldes eignen sich hierfür auch weichmagnetische Partikeleigenschaften, wobei sich eine magnetische Ausrichtung erst bei Einwirkung des magnetischen Feldes eintritt.

Literatur:
[1] J. H. Wood, G. C. Ganzi, P. A. Springthorpe: Continuous Electrodeionisation: Module Design Considerations for the Production of High Purity Water; in: J. A. Greig: Ion Exchange at the Millenium, Proceedings of IEX 2000, Churchill College Cambridge 16-21 July 2000; Imperial College Press 2000, Seiten 44-51
[2] US 5154809
[3] US 4636296

### Bezugszeichenliste:

- 1: Kationenaustauschermembran
- 2: Anionenaustauschermembran
- 3: Kathode
- 4: Anode
- 5: Zulauf
- 6: Ablauf für die demineralisierte wässrige Lösung
- 7: Ablauf für den mit Ionen angereicherten Anteil der wässrigen Lösung
- 8: Anionenaustauscherpartikel
- 9: Kationenaustauscherpartikel
- 10: Kompartiment
- 11: Richtungspfeil
- 12: Hartmagnetische Partikelfraktion
- 13: Unmagnetische Partikelfraktion
- 14: Magnetische Partikelfraktion
- 15: Permanentmagnet
- 16: Elektromagnet
- 17: Konzentratkompartiment (KK)
- 18: Demineralisationskompartiment (DK)

## Patentansprüche

1. Vorrichtung zur Elektrodeionisation (EDI) für die Demineralisierung von wässrigen Lösungen mit
a) mehreren Kationen- und Anionenaustauschermembranen (1) bzw. (2), welche in abwechselnder Reihenfolge zu einem Stapel zusammengesetzt sind, wobei die Zwischenräume zwischen den Austauschermembranen Kompartimente (10), welche von der wässrigen Lösung durchströmbar sind, bilden,
b) einer Kathode (3) und einer Anode (4), welche an den Stapel auf den außenliegenden Austauschermembranen anliegen und mit einer elektrischen Gleichspannung beaufschlagbar sind,
c) einem Mischbed aus jeweils einer Fraktion aus Kat- und Anionenaustauscherharzpartikeln (9) bzw. (8), welche nur einem Teil der Kompartimente (10), den Demineralisationskompartimenten (18), ausfüllen, in denen sich die Ionen beim Anliegen der elektrischen Gleichspannung zwischen Kathode (3) und Anode (4) anreichern, und zwar durch die jeweilige Austauschermembranen aus Richtung des anderen Teils der Kompartimente, den Kozentrationskompartiementen (17),
d) je einem Flüssigkeitszu- (5) und -ablauf (6, 7) für jedes Kompartiment (10) auf einer Stirnseite des Stapels für Einleitung der wässrige Lösung in die Kompartimente,
e) einem Gehäuse, in dem der Stapel zu allen Seiten hin dichtend eingesetzt ist und als Träger für die Flüssigkeitszuläufe und Abläufe dient, wobei das Gehäuse jede Austauschermembran an allen Rändern dichtend umschließt,
**dadurch gekennzeichnet, dass**
f) die Ionentauscherharzpartikel einer der beiden Faktionen durch Zusätze magnetische Eigenschaften aufweisen, sowie
g) die Vorrichtung eine Einrichtung zur Erzeugung eines Magnetfeldes aufweist, dessen Magnetfeldlinien den Stapel vorzugsweise orthogonal zu den Austauschermembranen durchdringt.

2. Vorrichtung zur Elektrodeionisation nach Anspruch 1, **dadurch gekennzeichnet, dass** das Mischbed alle Kompartimente (10) des Stapels ausfüllen.

3. Vorrichtung zur Elektrodeionisation nach Anspruch 1 oder 2, **dadurch gekennzeichnet, dass** die Einrichtung mindestens einen Elektromagneten (16) zur Erzeugung eines Magnetfeldes aufweist.

4. Vorrichtung zur Elektrodeionisation nach Anspruch 1 oder 2, **dadurch gekennzeichnet, dass** die Einrichtung mindestens einen supraleitenden Magneten zur Erzeugung eines Magnetfeldes aufweist.

5. Vorrichtung zur Elektrodeionisation nach Anspruch 1 oder 2, **dadurch gekennzeichnet, dass** die Einrichtung mindestens einen Permanentmagnet (15) zur Erzeugung eines Magnetfeldes aufweist.

6. Vorrichtung zur Elektrodeionisation nach einem der Ansprüche 1 bis 5, **dadurch gekennzeichnet, dass** die Ionentauscherharzpartikel einer der beiden Faktionen durch Zusätze überwiegend hartmagnetische Eigenschaften aufweisen und das Magnetfeld der Einrichtung nach Ausrichtung der magnetischen Ionentauscherharzpartikel in den befüllten Kompartimenten (10) entfernbar oder abschaltbar ist.

7. Vorrichtung zur Elektrodeionisation nach einem der Ansprüche 1 bis 5, **dadurch gekennzeichnet, dass** die Ionentauscherharzpartikel einer der beiden Faktionen durch Zusätze überwiegend weichmagnetische Eigenschaften aufweisen.

## Claims

1. Apparatus for electrodeionisation (EDI) for the demineralisation of aqueous solutions, said apparatus having:
a) a plurality of cation and anion exchanger membranes (1) and (2) respectively, which are combined in an alternating sequence to form a stack, the spaces between the exchanger membranes forming compartments (10) through which the aqueous solution can flow,
b) a cathode (3) and an anode (4), which abut against the stack on the externally situated exchanger membranes and can have an electrical direct voltage acting thereupon,
c) a mixed bed comprising respectively a fraction formed from cation and anion exchanger resin particles (9) and (8) respectively, which only fill some of the compartments (10), the demineralisation compartments (18), in which the ions are enriched by the application of the electrical direct voltage between cathode (3) and anode (4), this being through the respective exchanger membranes from the direction of the other compartments, the concentration compartments (17),
d) a respective liquid supply means (5) and discharge means (6, 7) for each compartment (10) on an end face of the stack for introducing the aqueous solution into the compartments, and
e) a housing in which the stack is inserted in a sealing manner towards all of the sides and serves as a carrier for the liquid supply means and discharge means, the housing surrounding each exchanger membrane at all of the edges in a sealing manner,
**characterised in that**
f) the ion exchanger resin particles of one of the two fractions have magnetic properties through additions, and
g) the apparatus has a means for generating a magnetic field, the magnetic field lines of which pass through the stack preferably orthogonally relative to the exchanger membranes.

2. Apparatus for electrodeionisation according to claim 1, **characterised in that** the mixed bed fills all of the compartments (10) of the stack.

3. Apparatus for electrodeionisation according to claim 1 or 2, **characterised in that** the arrangement has at least one electromagnet (16) for generating a magnetic field.

4. Apparatus for electrodeionisation according to claim 1 or 2, **characterised in that** the arrangement has at least one superconductive magnet for generating a magnetic field.

5. Apparatus for electrodeionisation according to claim 1 or 2, **characterised in that** the arrangement has at least one permanent magnet (15) for generating a magnetic field.

6. Apparatus for electrodeionisation according to one of claims 1 to 5, **characterised in that** the ion exchanger resin particles of one of the two fractions have mainly hard-magnetic properties through additions, and the magnetic field of the arrangement is removable or disconnectable according to the alignment of the magnetic ion exchanger resin particles in the filled compartments (10).

7. Apparatus for electrodeionisation according to one of claims 1 to 5, **characterised in that** the ion exchanger resin particles of one of the two fractions have mainly soft-magnetic properties through additions.

## Revendications

1. Dispositif d'électrodésionisation (EDI) permettant la déminéralisation de solutions aqueuses comprenant
a) plusieurs membranes échangeuses de cations et d'anions (1) ou (2) rassemblées en alternance en pile, les espaces entre les membranes échangeuses formant des compartiments (10) pouvant être traversés par la solution aqueuse,
b)une cathode (3) et une anode (4) qui s'appuient contre la pile sur les membranes échangeuses situées à l'extérieur et auxquelles on peut appliquer une tension électrique continue,
c) un lit mixte constitué respectivement d'une fraction de particules de résines échangeuses de cations et d'anions (9) ou (8), qui ne remplissent qu'une partie des compartiments (10), les compartiments de déminéralisation (18), dans lesquels les ions s'enrichissent en présence de la tension électrique continue entre la cathode (3) et l'anode (4) et ce à travers les membranes échangeuses respectives depuis l'autre partie des compartiments, les compartiments de concentration (17),
d)une arrivée de liquide (5) et une sortie de liquide (6, 7) pour chaque compartiment (10) sur une face avant de la pile pour l'introduction de la solution aqueuse dans les compartiments,
e) un carter, dans lequel la pile est placée de manière étanche de tous les côtés et qui sert de support aux entrées et sorties de liquide, le carter entourant chaque membrane échangeuse de façon étanche sur tous les bords,
**caractérisé en ce que**
f) les particules de résines échangeuses d'ions de l'une des deux fractions ont des propriétés magnétiques grâce à des additifs, et (g)
g) le dispositif comporte un équipement permettant la production d'un champ magnétique dont les lignes de champ magnétiques traversent la pile de préférence de manière orthogonale par rapport aux membranes échangeuses.

2. Dispositif d'électrodésionisation selon la revendication 1,
**caractérisé en ce que**
le lit mixte remplit tous les compartiments (10).

3. Dispositif d'électrodésionisation selon la revendication 1 ou 2,
**caractérisé en ce que**
l'équipement comprend au moins un électroaimant (16) permettant la production d'un champ magnétique.

4. Dispositif d'électrodésionisation selon la revendication 1 ou 2,
**caractérisé en ce que**
l'équipement comprend au moins un aimant supraconducteur permettant la production d'un champ magnétique.

5. Dispositif d'électrodésionisation selon la revendication 1 ou 2,
**caractérisé en ce que**
l'équipement comprend au moins un aimant permanent (15) permettant la production d'un champ magnétique.

6. Dispositif d'électrodésionisation selon l'une quelconque des revendications 1 à 5,
**caractérisé en ce que**
les particules de résines échangeuses d'ions de l'une des deux fractions ont des propriétés magnétiques essentiellement dures grâce à des additifs, et le champ magnétique de l'équipement peut être éloigné ou déconnecté après l'orientation des particules de résines échangeuses d'ions magnétiques dans les compartiments remplis (10).

7. Dispositif d'électrodésionisation selon l'une quelconque des revendications 1 à 5,
**caractérisé en ce que**
les particules de résines échangeuses d'ions de l'une des deux fractions ont des propriétés magnétiques essentiellement douces grâce à des additifs.
